# EUROPÄISCHE PATENTANMELDUNG

(11) **EP 2 353 690 A1**
(43) Veröffentlichungstag der Anmeldung: **10.08.2011**
(21) Anmeldenummer: 10016158.7
(22) Anmeldetag: 29.12.2010
(51) Int. Cl.: B01D 27/14, C02F 1/42, C02F 1/28

(54) **Filter zur Wasseraufbereitung**

(30) Priorität: 01.01.2010 DE 102010003980
(71) Anmelder: Infiltec GmbH, 67346 Speyer (DE); Malsy, Jürgen, 63110 Rodgau (DE)
(72) Erfinder: Malsy, Jürgen, 63110 Rodgau (DE)
(74) Vertreter: Wagner, Jutta

(57) **Zusammenfassung**

Die vorliegende Erfindung betrifft ein Filtersystem (10) mit einem Filtermodul (40), das in einem Filtergehäuse aus einem Filterkopf (20) und einer Kartusche (30) angeordnet ist, wobei das Filtermodul (40) ein formstabiles Filtermaterial umfasst, welches unter Freilassung eines Raumes (13) zwischen Kartusche (30) und Filtermodul (40) in der Kartusche (30) angeordnet wird und wobei das Filtermodul (40) einen Strömungskanal (44) aufweist, so dass eine zu filternde Flüssigkeit durch den Raum (13) zwischen der Kartusche (30) und dem Filtermodul (40), durch das Filtermodul und durch den Strömungskanal (44) fließen kann.

## Beschreibung

Die nachfolgende Erfindung bezieht sich auf ein Filtersystem und ein Verfahren zur Filtration von Flüssigkeiten, insbesondere Trinkwasser.

Zur Nachaufbereitung von Trinkwasser ist es, vor allem in der professionellen Gastronomie, üblich, Filtersysteme einzusetzen. Solche Filtersysteme bestehen in der Regel aus einem druckstabilen Filterkopf und einer druckstabilen Filterkartusche, die auch das Filtermedium enthält. Die Filtersysteme sollen Kalkausfällungen in nachgeschalteten Maschinen, z.B. in Kaffeemaschinen, Vendingautomaten, Spülmaschinen, Backöfen und Dampfgarern, Trinkwasserspendern etc., verhindern. Außerdem verhindern sie Korrosion, entfernen störende Geruchs- und Geschmacksstoffe, halten grobe und feine Partikel zurück, sorgen für eine gewünschte Mineralienkonzentration und verbessern ganz allgemein den Endproduktgeschmack. In manchen Fällen dienen sie auch zur Rückhaltung von Keimen.

Bekannte Filtersysteme zur Aufbereitung von Trinkwasser verwenden als Filtermedien lonenaustauscher unterschiedlicher Typen (auch in gesilberter Form), ggfs. Aktivkohle (auch in gesilberter Form) sowie Vliese und/oder Membranen. Die Ionenaustauscher bewirken vor allem eine Entkarbonisierung sowie eine Teil- oder Vollentsalzung, je nach lonenaustauschertyp oder -kombination. Ionenaustauscher entziehen dem Trinkwasser insbesondere Calcium- und Schwermetallionen und tauschen diese gegen von dem lonenaustauscher bereitgestellte Ionen, typischerweise Natrium oder Wasserstoff, aus. Aktivkohle bindet störende Geschmacks- und Geruchsstoffe wie Chlor oder organische Substanzen, die im Trinkwasser vorhanden sind. Ist die Aktivkohle oder der lonenaustauscher mit Silber beaufschlagt, kann zudem das Keimwachstum gehemmt werden. lonenaustauschersubstanzen verschiedener Art, organische wie anorganische, sind seit langem bekannt, ebenso Aktivkohleformen. Darüber hinaus wird das Wasser durch Vliese und/oder Membranen geführt, die, abhängig von ihrer Ausführung, grobe und/oder feine Partikel und/oder Keime zurückhalten.

Der lonenaustauscher wird bei den bisher bekannten Filtersystemen als Schüttung in ein als Kartusche bezeichnetes, in der Regel zylindrisches Gehäuse eingefüllt. Vliese werden benötigt, um die lonenaustauscherschüttung in der Kartusche hinsichtlich ihrer Positionierung zu sichern. Die Kartusche wird an einen typischerweise fest in der Leitung installierten Filterkopf angeschlossen. Das zu filternde Wasser tritt in den Filterkopf ein, wird von dort über ein Rohr, welches zentral oder dezentral in der lonenaustauscher/Aktivkohleschüttung bis nahezu zum Boden der Kartusche reicht zu diesem geführt und strömt dann durch die Schüttung, wobei es filtriert wird. Oben fließt das Filtrat wieder in den Filterkopf aus dem es entnommen wird. Eine weitere Möglichkeit der Strömungsführung ist ein Eintritt des zu filternden Wassers in den Filterkopf, von dort zunächst von oben durch die lonenaustauscherschüttung und/oder den Aktivkohlebereich zum Boden der Kartusche, wobei es filtriert wird, und danach über ein in der Regel zentrales Rohr wieder zum Filterkopf, wo es entnommen wird.

Das übliche Geschäftskonzept sieht vor, dass einmalig ein Komplettfilter umfassend den Filterkopf und eine mit Filtermedium befüllte Kartusche geliefert wird. Anschließend wird in regelmäßigen Abständen die Kartusche gegen neue Kartuschen inklusive Filtermedium ausgetauscht. Ein Austausch erfolgt nach Erreichen der Kapazität des Filtermediums oder nach einer festgelegten Einsatzdauer, die häufig ein Jahr beträgt.

Die Kapazität des lonenaustauschermaterials und auch der Aktivkohle erschöpft sich mit der Zeit. Die Standzeit hängt davon ab, wie hoch die Konzentration an zu filternden Ionen bzw. Schadstoffen in dem Wasser ist. Übliche Standzeiten betragen einige Wochen oder Monate, je nach Wasserabnahme. Am Ende der Standzeit des lonenaustauschermaterials bzw. der Aktivkohle wird dieses mitsamt der Kartusche ausgetauscht und in der Regel entsorgt, da eine Aufbereitung häufig zu kostenintensiv ist. Ein Austausch nur des lonenaustauschermaterials bzw. der Aktivkohle ist in der Regel nicht möglich, da bei herkömmlichen Filtersystemen ein Entfernen des lonenaustauschers und/oder der Aktivkohle meist nur durch Zerstörung der meist aus Kunststoff bestehenden Filterkartusche möglich ist. In allen Fällen, in denen dennoch eine Entnahme des lonenaustauschers und/oder der Aktivkohle vorgenommen wird, wird zuvor die Kunststoffkartusche aufgebrochen und die Kunststoffteile der Filterkartusche werden entsorgt. Hierbei fallen heute Plastikmengen von mehreren 100 to pro Jahr an, ungeachtet der zusätzlichen erheblichen Mengen an lonenaustauscher und Aktivkohle, die durch die sehr häufig stattfindende Komplettentsorgung der erschöpften Filterkartusche resultieren (Hausmüll).

Unter Gesichtspunkten des Umweltschutzes wäre es wünschenswert, die Abfallmenge an Kunststoff und lonenaustauscher/Aktivkohle zu reduzieren, insbesondere die Kartusche nicht entsorgen zu müssen.

In manchen Fällen ist eine vollständige oder weitgehende Entmineralisierung unerwünscht. Wenn das gefilterte Wasser z.B. zur Zubereitung von Getränken wie Kaffee oder Tee verwendet wird, sollte, um ein optimales Geschmackserlebnis zu erzielen, eine Mindestkonzentration an Mineralien im filtrierten Wasser verbleiben. Hierzu sind aus dem Stand der Technik Filtersysteme bekannt, die es zulassen, dass ein Teil des aufzubereitenden Wassers nicht die lonenaustauscherschüttung passiert. Der nicht über den lonenaustauscher geleitete Wasseranteil wird als Verschnittwasser oder auch Bypasswasser bezeichnet. Der Verschnittwasseranteil wird typischerweise zur geschmacklichen Aufbereitung über einen nicht gesilberten Aktivkohlefilter oder zur Entkeimung und geschmacklichen Aufbereitung über einen gesilberten Aktivkohlefilter geführt. Darüber hinaus sorgt das Verschnittwasser für eine Reduzierung des korrosiven Verhaltens des Filtrats.

Es werden derzeit Filtersysteme hergestellt, die entweder einen variabel einstellbaren Verschnittwasseranteil bereitstellen, üblich sind Bereiche von 0 % bis 70 %, oder die einen festen, vorgegebenen Verschnittwasseranteil zur Verfügung stellen, der üblicherweise zwischen 0 % und 30 % liegt. Die Abzweigung des Verschnittwassers erfolgt durch eine entsprechende Mechanik im Filterkopf und/oder in der Filterkartusche, die eine Bereitstellung von Teilströmen ermöglicht.

Variable Verschnittwasseranteile werden sehr häufig durch Regelventile am Filterkopf stufenweise, in der Regel in 10% Stufen, eingestellt. Spezielle Strömungsführungskonzepte im Filterkopf und in der Kartusche (z.B. Doppelrohrsysteme und Einfachrohrsysteme) stellen sicher, dass der Verschnittwasseranteil keinen Kontakt mit dem lonenaustauscher erhält. Das Verschnittwasser wird direkt zur Aktivkohle und/oder den Vliesen bzw. Membranen geleitet. Solche Konstruktionen sind jedoch störanfällig.

Feste Verschnittwasseranteile werden in der Regel durch Mechanik und spezielle Strömungsführung in der Kartusche und/oder im Filterkopf erzeugt.

Es ist wünschenswert, Filtersysteme bereitzustellen, die es ermöglichen, auf einfache Weise, ohne zusätzlich notwendige Funktionsbauteile und/oder Funktionsbaugruppen wie z.B. mechanische Regeleinrichtungen im Filterkopf und/oder Rohrsysteme einen definierten Verschnittwasseranteil in einem Filtersystem bereitzustellen.

Aufgabe der vorliegenden Erfindung war es daher, ein Filtersystem anzugeben, welches einerseits geringere Abfallmengen ermöglicht und andererseits eine unkomplizierte Einstellung eines Verschnittwasseranteils erlaubt.

Diese Aufgabe wird durch ein Filtersystem mit einem formstabilen Filtermodul, das in einem Filtergehäuse angeordnet ist, gelöst, wobei das Filtermodul ein Filtermaterial umfasst. Die Aufgabe wird weiter durch ein Verfahren zur Filterung und die Verwendung des Filtersystems zur Aufbereitung von Trinkwasser gelöst.

Das Filtermodul umfasst vorzugsweise ein gesintertes Filtermaterial, welches an sich, d.h. ohne zusätzliche Wandungen, Gehäuse etc., formstabil ist. Geeignete Verfahren zur Herstellung solcher Filtermaterialien sind an sich bekannt, z.B. aus EP 1 117 706 und der EP 1 488 840. Zur Herstellung des Filtermoduls wird das Filtermaterial mit einem geeigneten Bindemittel, z.B. Polyethylen, gemischt und durch Anwendung von Druck und erhöhter Temperatur zu einem in sich stabilen Formkörper gesintert. Üblicherweise weist das Filtermodul eine zylindrische Form auf. Es sind aber auch andere Formen, z.B. konisch, Quader, Würfel, Kugel, Pyramide, oval, sternförmig oder ähnliche Geometrien oder Kombinationen dieser Geometrien denkbar.

Als Filtermaterial dient vorzugsweise ein Ionenaustauscher oder eine Aktivkohle oder besonders bevorzugt eine Kombination aus lonenaustauscher und Aktivkohle. Geeignet sind z.B. schwach und stark saure Kationenaustauscher, schwach und stark basische Anionenaustauscher, anorganische lonenaustauscher wie Aluminiumsilicate, Zeolithe, Tonmineralien und andere an sich bekannte lonenaustauscher sowie Gemische von zwei oder mehr lonenaustauschern. Das Filtermaterial kann gesilbert oder ungesilbert sein. Übliche lonenaustauschermaterialien enthalten aus produktionstechnischen Gründen (bessere Abfüllbarkeit u.ä) häufig einen geringen Anteil an Aktivkohle, auch diese sind erfindungsgemäß geeignet.

Bei Verwendung von wenigstens zwei Filtermaterialien können diese entweder inhomogen oder vorzugsweise homogen vermischt im Filtermodul vorliegen, oder aber ganz besonders bevorzugt diskrete Bereiche bilden.

In einer bevorzugten Ausführungsform umfasst das Filtermodul einen inneren Bereich aus gesinterter Aktivkohle und einen dicht angesinterten oder aufgesteckten äußeren Bereich aus lonenaustauscher. Die Verbindung zwischen der inneren Aktivkohle und dem äußeren lonenaustauscher kann reversibel oder irreversibel ausgeführt sein. Der lonenaustauscher kann die gesamte Oberfläche des Aktivkohlebereichs umschließen oder aber einen Abschnitt davon freilassen. Ist ein Abschnitt freigelassen so wird dabei automatisch und auf sehr einfache Weise ein Verschnittwasser bereitgestellt. Es ist weiter bevorzugt, in dem nicht vom lonenaustauscher umgebenen Bereich zusätzlich Aktivkohle vorzusehen, so dass der äußere Umfang des Filtermoduls über seine Höhe konstant bleibt. Auch in diesem Fall ergibt sich ein Verschnittwasser. Der freigelassene Abschnitt kann vorteilhaft an einem Ende, oben oder bevorzugt unten, des Filtermoduls vorgesehen werden, es ist aber ebenso möglich, diesen auf beliebiger Höhe anzuordnen. Ebenso können mehrere freigelassene Abschnitte vorgesehen sein, z.B. zwei, drei, vier, fünf oder noch mehr.

In einer weiteren bevorzugten Ausführungsform umfasst das Filtermodul ein formstabiles Filtermaterial in Form einer gesinterten Mischung aus lonenaustauscher und Aktivkohle. Auch gesilberte Aktivkohle und/oder gesilberter lonenaustauscher sind möglich. Überraschedn hat sich gezeigt, dass durch Variantion des Anteils an Aktivkohle oder durch Variation der Dicke des Filtermoduls ein Verschnittwasseranteil erhalten lässt. Wenn entweder mehr Aktivkohle und/oder ein dünneres Modul gewählt wird, vermindert sich der Austausch von lonen an dem lonenaustauscher, so dass ganz wie bei einem herkömmlich am lonenaustauscher vorbei geführten Verschnittwasser eine Restmenge an lonen, insbesondere Calciumionen, im gefilterten Wasser verbleibt. Diese Ausführungsform ist auch deswegen bevorzugt, weil sie besonders einfach zu fertigen ist.

In einer weiteren Ausführungsform umfasst das Filtermaterial eine Schüttung von lonenaustauschermaterial, welche auf verschiedene Weise ein formstabiles Filtermodul bilden kann. Einerseits ist es möglich, die Schüttung allseits mit gesinterter Aktivkohle zu umgeben, also einen inneren Abschnitt aus gesinterter Aktivkohle und eine äußere Wandung aus gesinterter Aktivkohle bereitzustellen, so dass das lonenaustauschermaterial in den Zwischenraum gefüllt werden kann. Andererseits kann ein innerer oder äußerer Abschnitt aus gesinterter Aktivkohle mit einer wasserdurchlässigen Wandung, z.B. in Form eines Gitters, ggfs. mit Vlies und/oder Membraneinlage, oder einer porösen Wandung, kombiniert werden, so dass das lonenaustauschermaterial zwischen diese eingefüllt werden kann.

In einer dritten Variante ist es möglich, sowohl das lonenaustauschermaterial als auch die Aktivkohle in Form einer Schüttung vorzusehen, wobei dann entsprechende, wasserdurchlässige Wandungen vorgesehen sind, welche eine radiale Durchströmung des Filtermoduls ermöglichen. Wie bei dem gesinterten Filtermaterial kann ein Verschnittwasser über eine inhomogene Anordnung der Filtermaterialien erreicht werden, oder bei homogener Mischung durch den Anteil an Aktivkohle und/oder die Dicke des Filtermoduls.

Bei all diesen Varianten kann durch Vorsehen von Abschnitten, bei denen statt lonenaustauschermaterial nur Aktivkohle im Strömungsweg des Wassers vorliegt, ein Verschnittwasser bereitgestellt werden. Ist die lonenaustauscherschüttung allseits von gesinterter Aktivkohle gehalten, so ergibt sich im unteren Bereich des Filtermoduls zwangsläufig ein Verschnittwasser, dessen Anteil durch die Höhe der unteren Aktivkohleschicht einstellbar ist. Wird eine Wandung vorgesehen, so kann ein oder mehrere Abschnitte vorgesehen werden, an denen eine Aktivkohleschüttung oder ein Bereich gesinterter Aktivkohle bis zur Wandung reicht. Sind zwei Wandungen vorgesehen, wird das Verschnittwasser durch eine Aktivkohleschüttung realisiert. Wie oben beschrieben, ist die Anordnung und Anzahl der Abschnitte des Filtermoduls, welche nur Aktivkohle als Material aufweisen, wählbar.

Die Bereitstellung von Verschnittwasser durch die Variation der Dicke des Filtermoduls und/oder des Anteils an Aktivkohle in einem aus Aktivkohle und lonenaustauscher gemischten Filtermaterial kann auch bei herkömmlichen, vertikal angeströmten Filtermodulen erreicht werden. Auch bei diesen lässt sich durch die Variation dieser Parameter ein unvollständiger lonenaustausch bewirken. Die erfindungsgemäßen Filtermodule, sei es mit Filtermaterial-Schüttung oder bevorzugt als in sich formstabiles Filtermaterial, können so auch in vorhandenen Filtern vorteilhaft zum Einsatz kommen. Dadurch kann beispielsweise bei einem Filtersystem ohne Verschnittwasser auf einfache Weise ein System mit Verschnittwasser geschaffen werden. Oder bei einem System mit festem Verschnittwasser dieses vergrößert werden. Gegebenenfalls kann auch bei Versagen der Regelmechanik anstelle einer aufwändigen Reparatur auf eine Verschnittwassereinstellung mittels erfindungsgemäßem Filtermodul umgestellt werden.

Die erfindungsgemäße Lösung stellt ein Zwischending zwischen den bekannten mechanisch fest eingestellten Verschnittwasseranteilen und den regelbaren Systemen dar. Analog zu den regelbaren Systemen kann mit ein und demselben Filterkopf und -gehäuse ein Verschnittwasseranteil gewählt werden, indem ein Filtermodul mit passendem Verschnittwasser eingesetzt wird. Es ist aber keine aufwändige bzw. störanfällige Regelung vorhanden. Die Einstellung eines Verschnittwasseranteils über die Auswahl eines passenden Filtermoduls ist in der Praxis völlig ausreichend. Üblicherweise wird auch bei den regelbaren Systemen nach Feststellung der Wasserqualität durch den montierenden Techniker das Verschnittwasser fest eingestellt und erfährt keine Veränderung während der Lebensdauer einer Filtermaterialfüllung. Das erfindungsgemäße System bietet hier ggfs. einen zusätzlichen Vorteil, denn bei den regelbaren Systemen ist nach dem Wechsel des Filtermaterials teilweise eine erneute Einregelung des Verschnittwassers nötig. Erfindungsgemäß wird das Verschnittwasser alleine durch das Filtermodul realisiert, ein Wechsel erfordert somit unter Umständen deutlich weniger Aufwand, da in keinem Fall eine Einreglung an vorgesehenen Regeleinrichtungen erfolgen muss. Bei den Filtersystemen, die heute mit festem Verschnittwasseranteil angeboten werden, liegt der Nachteil darin, dass im Falle, dass der Techniker im Zuge eines Kartuschenwechsels feststellt, dass aufgrund einer veränderten Trinkwasserhärte, der zuvor notwendige Verschnittwasseranteil nicht mehr ausreicht, um die gewünschte Filtratqualität zu erzielen, der Kunde nur zwischen zwei aufwendigen und kostenintensiven Folgemaßnahmen wählen kann. Er muss entweder den "alten" Filterkopf gegen einen neuen für festen Verschnittwasseranteil geeigneten Filterkopf oder einen Filterkopf mit variabler Verschnitteinstellung einbauen lassen. Bei der erfindungsgemäßen Lösung ist ein Austausch des Filterkopfes zu keinem Zeitpunkt notwendig.

Das Filtermodul kann zusätzlich Vliese und/oder Membranen zur Abtrennung von groben und feinen Partikeln umfassen. Diese können entweder in Strömungsrichtung vor dem Filtermaterial und/oder nach dem Filtermaterial und/oder zwischen den Filtermaterialien angeordnet sein. Ein Vlies oder eine Membran kann die innere Oberfläche des Filtermoduls bilden, in welcher das Wasser zum Filtermaterial hinströmt oder zum Ausgang des Filtersystems strömt. Hierbei ist es zweckmäßig, wenn das Filtermaterial auf das Vlies bzw. die Membran aufgesintert wird. Dadurch ergibt sich eine besonders dichte Verbindung von Filtermedium und Vlies bzw. Membran.

Die eine Seite des Filtermoduls muss für das Rohwasser unzugänglich gemacht werden, damit kein Rohwasser in den inneren Bereich, z.B. einen Innenhohlzylinder, strömen kann und so auf direktem Weg und ohne vorher das Filtermedium passiert zu haben auf die Filtratseite gelangt. Dies kann auf verschiedene Arten erfolgen:
a) durch Verschließen mit einer Endkappe, die als Scheibe oder in anderen geometrischen Formen, die aus Plastik, Metall, anderen geeigneten Materialien oder Kombinationen der Materialien besteht. Die Verbindung zum Filtermedium kann dabei durch Kleben, Harzen, Silikonisieren, Vulkanisieren, Verschweißen u.ä. erfolgen,
b) durch Aufstecken auf entsprechende Hülsen in der Filterkartusche, wobei die Abdichtung zur Rohwasserseite durch Kleben, O-Ringdichtungen oder andere Dichtungsgeometrien, Harzen, Silikonisieren, Kunststoffschweißen, Metallschweißen, Presspassung oder andere Dichtungstechniken erfolgen kann,
c) durch Einstecken einer Hülse, auch in Verbindung mit einer Endkappe, in den inneren Hohlraum der Filterkartusche, die Abdichtung zur Rohwasserseite kann durch Kleben, O-Ringdichtungen oder andere Dichtungsgeometrien, Kunststoffschweißen, Metallschweißen, Harzen, Silikonisieren, Presspassungen oder andere Dichtungstechniken erfolgen,
d) durch direktes Verkleben des Zugangs zum Innenbereich ohne zusätzliche Teile oder durch direktes Verkleben mit dem Kartuschenboden,
e) durch Kombinationen von zwei oder mehreren der Varianten a)-d).

Der Aufbau des Filtersystems unterscheidet sich in der Regel nicht von den bekannten Systemen. So wird das Filtersystem zweckmäßig aus einem fest in eine Wasserleitung eingebauten Filterkopf und einer damit verbindbaren Kartusche, die das Filtermedium enthält, gebildet. Die Kartusche wird beispielsweise durch ein Gewinde, einen Bajonettverschluss oder eine Flanschverbindung mit dem Filterkopf verbunden.

Jedoch ist im Unterschied zu den bisherigen Filtermaterialschüttungen kein Rohr in der Mitte des Materials notwendig, vielmehr wird der benötigte Strömungskanal durch einen entsprechenden Hohlraum in dem Filtermaterial gebildet. Das Filtermaterial wird auch nicht vertikal durchströmt, sondern horizontal bzw. radial. Dazu ist zwischen dem Filtermodul und der Kartuschenwandung ein Raum, im Falle der typischen zylindrischen Filtersysteme ein Ringspalt, vorgesehen. Das Wasser strömt aus der Leitung über den Zulauf in den Filterkopf. Von dort wird es entweder in den Innenraum des Filtermoduls geführt, von wo aus es durch das Filtermedium und ggfs. vorhandene Vliese bzw. Membranen strömt und dann von der oberen Fläche aus in die aus dem Filterkopf führende Leitung gelangt. Oder es wird in den Raum zwischen Kartuschen und Filtermodul geführt und gelangt nach Passage von Filtermedium und ggfs. Vliesen/Membranen durch den inneren Hohlraum des Filtermoduls zum Auslauf des Filtersystems im Filterkopf.

Das erfindungsgemäße Filtermodul ist in ein Gehäuse, d.h. die Kartusche des Filtersystems einsetzbar, so dass bei einem Wechsel des Filtermediums die Kartusche vorteilhaft nicht mehr entsorgt werden muss.

Eine weitere im Hinblick auf den Umweltschutz positive Eigenschaft ist das verringerte Gewicht und das vergleichsweise geringere Volumen der bereitzustellenden Austauschteile, welches die Transportkosten, insbesondere den Kraftstoffverbrauch für den Transport, reduziert.

Auch entfällt das bei den bekannten mit Schüttungen des Filtermediums gefüllten Kartuschen notwendige Innenrohr und weitere für diese unabdingbare Funktionsbauteile und Funktionsbaugruppen wie Vliese, Trennscheiben etc). Darüber hinaus wird die Anzahl an Kunststoffdichtungen deutlich reduziert. Hierdurch wird die Effizienz des Filtersystems gesteigert, denn die Kontaktzeit des Wassers mit dem Filtermedium ist bei der erfindungsgemäß erfolgenden horizontalen Durchströmung des Mediums im Fall der typischen langgestreckten zylindrischen Formen generell höher als bei einer vertikalen Durchströmung. Dies liegt an der überproportional verminderten Strömungsgeschwindigkeit bei der horizontalen Durchströmung.

Die erfindungsgemäßen Filtermodule weisen den weiteren Vorteil auf, dass sie sehr einfach sterilisierbar/desinfizierbar sind. So können sie in einen Kunststoffbeutel verpackt, z.B. eingeschweißt werden, und in an sich bekannter Weise, etwa durch Strahlung, sterilisiert werden. Eine weitere Möglichkeit besteht darin, das Filtermodul thermisch zu sterilisieren und anschließend steril in Folie zu verpacken.

Zuletzt erweist sich auch die Einstellung des Verschnittwasseranteils über das Anströmflächenverhältnis von Aktivkohle und lonenaustauscher als vorteilhaft, weil keine störanfälligen Regelungsmechaniken, die z. T. elektronische Regeleinrichtungen vorsehen, benötigt werden. Zwar kann der Verschnittwasseranteil nicht wie bei den bekannten mittels Regelventil eingestellten Systemen im laufenden Betrieb gewählt werden, dafür sind die Filtermodule gezielter auf die jeweils notwendigen Anforderungen eines Anwendungsbereiches z.B. Kaffeemaschinen abgestimmt. Anders als bei den handelsüblichen Systemen mit festem Verschnittwasseranteil ist aber mit ein und demselben Filterkopf für alle Anwendungen nur durch Wahl des Filtermoduls der gewünschte Verschnittwasseranteil einstellbar.

Das erfindungsgemäße Filtersystem eignet sich besonders für den Einsatz in der professionellen Gastronomie zu den bereits zuvor erläuterten Zwecken.

Ein erstes Ausführungsbeispiel des erfindungsgemäßen Filtermoduls umfasst ein zylindrisches, röhrenförmiges lonenaustauschermodul, in dem ein ebenfalls zylindrisches röhrenförmiges Aktivkohlemodul so angeordnet ist, dass das Aktivkohlemodul unmittelbar an der inneren Wandung des lonenaustauschermoduls anliegt. Dabei bildet das Innere der beiden Module, das Aktivkohlemodul, ein Strömungsrohr, so dass das Filtermodul eine Vielzahl von Strömungspfaden für das zu filtrierende Trinkwasser bereitstellt.

Das Aktivkohlemodul muss dabei nicht die gleiche Länge aufweisen, wie das lonenaustauschermodul, die beiden Elemente können, abhängig von dem gewünschten Verschnittwasser, so angeordnet sein, dass der eine Zylinder länger ist als der andere, so dass sich die Module nur entlang eines Teils ihrer Länge berühren.

Das Aktivkohlemodul kann ferner einen zylindrischen oder einen zylindrischen und röhrenförmigen Aktivkohlefuß aufweisen. Die Aussenwandung des lonenaustauschermoduls schließt dabei mit der Aussenwandung des röhrenförmigen Aktivkohlefußes bündig ab, so dass das Wasser den Filter nicht unfiltriert passieren kann.

Zur Formgestaltung des lonenaustauschermoduls kann eine erste Schicht durch ein Fasermaterial bereitgestellt sein, an das als eine zweite Schicht ein Kunststoffgranulat aus dem Filtermaterial und einem thermoplastischem Kunststoff als Bindemittel angesintert ist. Das Kunststoffgranulat kann vorteilhaft Teilchengrößen in einem Bereich von 1 µm bis 400 µm aufweisen, abhängig von der gewünschten Beeinflussung der Strömung des zu filtrierenden Wassers und abhängig davon, ob das Wasser von partikulärem Material befreit werden soll. Im Falle des bevorzugten Filtermoduls mit Aktivkohle und lonenaustauscher als Filtermaterial ist es bevorzugt, zunächst aus Aktivkohlepulver oder -granulat und Bindemittel ein Aktivkohlemodul durch Sinterung zu fertigen, an welches dann lonenaustauschermaterial und Bindemittel zur Bildung eines fest verbundenen lonenaustauschermoduls angesintert werden. Alternativ wird der gesinterte Aktivkohlekern in eine z.B. aus Gitter mit Vlieseinlage bestehende Wandung gestellt und eine lonenaustauscherschüttung in den Zwischenraum eingefüllt. Zur Bereitstellung von Verschnittwasser erfolgt das Einfüllen im Wechsel mit Aktivkohleschüttung oder aber der Aktivkohlekern weist einen verbreiterten oberen oder unteren Abschnitt auf, welcher bis zur Wandung reicht.

Eine Regeneration des Moduls ist - auch *in-situ -* möglich, indem das lonenaustauschermodul von der Trinkwasserzufuhr abgekoppelt statt dessen mit entsprechend lonen-beladener Lösung beaufschlagt wird.

Das erfindungsgemäße Filtermodul kann zur Schaffung des erfindungsgemäßen Filtersystems genutzt werden, indem das Filtermodul in einer Kartusche eines Filtergehäuses angeordnet wird. Dabei wird ein Raum, z.B. bei zylindrischen Modulen ein Ringspalt, um das Filtermodul bereitgestellt, in dem das Wasser zum Anströmen oder Verlassen des Filtermoduls fließen kann. Der obere Abschnitt des Filtergehäuses mündet in einen Filterkopf, der einen Zulauf, z.B. in Form eines Stutzen, aufweist. Der Strömungskanal des Filtermoduls mündet in einen Filtratablauf, z.B. in Form eines Stutzens, der sich durch den Filterkopf nach außen erstreckt, so dass das Wasser entnommen werden kann. Es wird ein Strömungspfad bereitgestellt, der sich über den Zulauf, axial nach unten zwischen der Aussenwandung des Filtermoduls und der Innenwandung der Kartusche, weiter radial nach innen durch das Filtermaterial und in das Strömungsrohr des Filtermoduls erstreckt. Von dort fließt das Wasser, einem axialen Strömungspfadabschnitt aufwärts folgend, in Richtung des Filtratablaufs. Da das Wasser vom Wasserhahn über den Zulauf über das Filtermodul geführt wird, ist das Filtersystem mit Druck beaufschlagt und das Wasser fließt über den Filterkopf ab. Selbstverständlich kann das Wasser auch genau anders herum geführt werden, also von dem Anschluss des Filterkopfes, der mit dem Strömungsrohr verbunden ist zunächst durch den Strömungskanal, dann durch das Filtermedium in den Raum zwischen Filtermodul und Kartusche und von dort zu dem mit diesem Raum verbundenen Anschluss des Filterkopfes.

Durch die Bereitstellung des erfindungsgemäßen Filtersystems ist es möglich, eine Trinkwasseraufbereitung unter Einstellung eines Verschnittwasseranteils flexibel zu handhaben, indem einfach ein geeignetes Filtermodul eingesetzt wird, das einen über die Anströmflächen des Aktivkohlemoduls und des lonenaustauschermoduls vorbestimmbaren Bypass des Wassers bereitstellt, das nicht dem lonenaustausch unterzogen werden soll.

Die Erfindung soll anhand der beigefügten Figuren näher erläutert werden, ohne jedoch auf die gezeigten Ausführungsformen beschränkt zu sein. Gegenstände oder Teile von Gegenständen, die im Wesentlichen gleich oder ähnlich sind, können mit denselben Bezugszeichen versehen sein. Die Figuren sind lediglich schematische Darstellungen von Ausführungsbeispielen der Erfindung. Die Erfindung bezieht sich auch auf sämtliche Kombinationen von bevorzugten Ausgestaltungen, soweit diese sich nicht gegenseitig ausschließen. Es zeigt:
- **Fig. 1a**: eine perspektivische Seitenansicht eines Aktivkohlemoduls,
- **Fig.**: **1** beine Seitenschnittansicht eines Filtermoduls aus lonenaustauschermodul und Aktivkohlemodul,
- **Fig. 1c**: das Filtermodul aus **Fig. 1b** von oben,
- **Fig. 2**: eine perspektivische Seitenansicht eines Aktivkohlemoduls,
- **Fig. 3a**: eine Seitenschnittansicht eines unteren Abschnitts eines Filtersystems,
- **Fig. 3b**: eine Seitenschnittansicht eines Filterkopfs des Filtersystems,
- **Fig. 3c**: eine Seitenschnittansicht des Filtermoduls mit einem Aktivkohlemodul mit Aktivkohlefuß,
- **Fig. 3d**: ein Filtersystem mit einem erfindungsgemäßen Filtermodul mit Aktivkohlemodul und -fuß,
- **Fig. 4a**: eine schematische Darstellung des Strömungsverlaufs des Filtrats in einem erfindungsgemäßen Filtermodul ohne Aktivkohlefuß,
- **Fig. 4b**: eine schematische Darstellung des Strömungsverlaufs des Filtrats in einem erfindungsgemäßen Filtermodul mit Aktivkohlefuß,
- **Fig. 5a** bis **5c**: eine Verwendung eines Filtermoduls mit variieren der lonenaustauschermodullänge bei gleich bleibendem Aktivkohlemodul,
- **Fig. 6a bis 6c**: eine Verwendung eines Filtermoduls mit einem Aktivkohlemodul mit Fuß.
- **Fig. 7a bis 7d**: Filtermodule mit Variation des Verschnittwassers

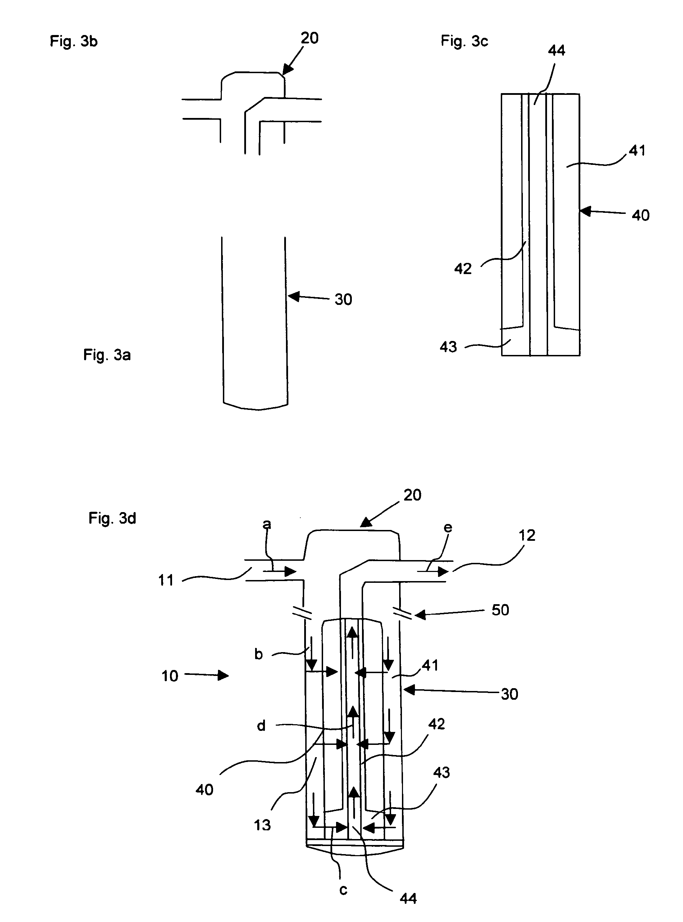

Kernstück der vorliegenden Erfindung ist ein formstabiles Filtermodul, das dazu geeignet ist, in ein entsprechendes Filtersystem, wie es in **Fig. 3d** gezeigt ist, eingesetzt zu werden. Das erfindungsgemäße Filtersystem ermöglicht dabei, dass durch eine entsprechende Gestaltung des Filtermoduls, wenn gewünscht, ein definierter Teil des in das Filtersystem 10 einströmenden Wassers teilweise oder vollständig deionisiert wird, während der andere Teil des Wassers, das Verschnittwasser, lediglich über die Aktivkohle geführt und von geschmacksbeeinträchtigenden Substanzen befreit wird.

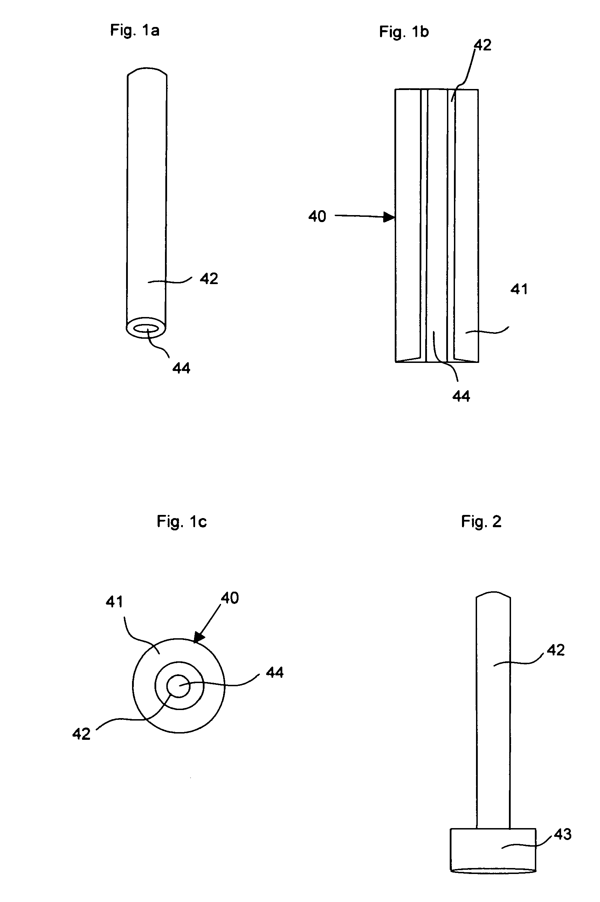

Dies wird erreicht, indem ein erfindungsgemäßes Filtermodul 40 eingesetzt wird, wie es in **Fig. 1b****,** **3c****,** **4a und 4b** gezeigt ist. Dieses Filtermodul 40 dient der Filtration von Trinkwasser, insbesondere im Bereich der Gastronomie. Es umfasst ein zylindrisches, röhrenförmiges Aktivkohlemodul 42, wie in **Fig. 1a** gezeigt; das Aktivkohlemodul 42 aus **Fig. 2a** umfasst auch einen Aktivkohlefuß 43.

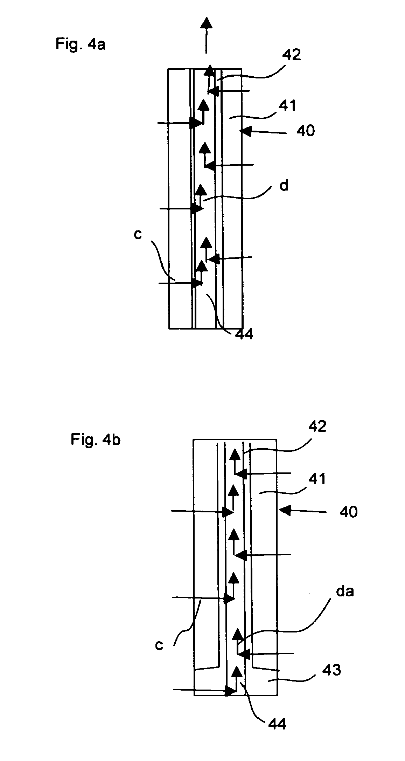

Das Aktivkohlemodul 42, das zylindrisch und röhrenförmig ist, wie sich aus **Fig. 1c** ergibt, wo auch der von dem Aktivkohlemodul 42 umfasste Strömungskanal 44 gezeigt ist, ist in einem ebenso zylindrischen und röhrenförmigem lonenaustauschermodul 41, siehe **Fig. 1b**, angeordnet. Die beiden Elemente liegen koaxial aneinander an und erlauben das Durchströmen von Wasser zu Aufbereitungszwecken, wie in **Fig. 4a und 4b****, 5a,b,c und 6a,b,c** gezeigt.

**Fig. 4a** zeigt die Variante eines Filtermoduls 40 mit einem lonenaustauschermodul 41, das gleich lang ist wie das Aktivkohlemodul 42, das es umgibt. Radial von außen den lonenaustauscher 41 anströmendes Wasser - siehe Pfeile c - durchdringt nunmehr zuerst die lonenaustauscherschicht 41 und wird dabei dem lonenaustausch unterzogen, ehe es durch die Aktivkohleschicht 42 gelangt und nun, dem Strömungspfad d folgend, im Strömungskanal 44 nach oben gedrückt wird. In diesem Fall wird kein Verschnittwasser bereitgestellt, da der gesamte Anteil des Wassers zunächst durch das lonenaustauschermodul 41 und dann durch das Aktivkohlemodul 42 geführt wird.

Soll ein Teil des zu filtrierenden Wassers nicht dem lonenaustausch unterzogen werden, damit dieser Anteil mineralreicher bleibt und sich daher besser für die Zubereitung etwa von Tee und Kaffee eignet, so kann eine Filtermodulanordnung gewählt werden, wie sie in **Fig. 4b** gezeigt ist. Dieses Filtermodul 40 besitzt ein Aktivkohlemodul 42 mit einem Fuß 43, der es ermöglicht, dass das von außen durch das Filtermodul anströmende Wasser teilweise unmittelbar lediglich über den Aktivkohlefuß 43 in das Strömungskanal 44 gelangt und folglich nicht der Deionisierung unterzogen wird. Damit ist es auf einfache Weise möglich, durch eine Festlegung des Verhältnisses einer Anströmfläche des Aktivkohlemoduls und des lonenaustauschermoduls festzulegen, in welchem Maße Wasser unmittelbar und ohne der Deionisierung unterzogen zu werden in das Strömungsrohr 44 geführt wird. Vorteilhaft wird es dabei, auch wenn es nicht deionisiert wird, dennoch durch die Aktivkohle gereinigt.

Ein derartiges Modul kann einfach regeneriert werden, selbst wenn es im Filtersystem verbleibt, indem es statt durch Leitungswasser einfach nur durch entsprechend mit lonen beladenes Wasser angeströmt wird, bis der gewünschte Regenerationsgrad erreicht ist.

Das Filtermodul 40 kann in ein erfindungsgemäßes Filtersystem 10, wie in **Fig. 3d** gezeigt, eingebaut werden. Ein geeignetes Filtergehäuse umfasst eine Kartusche 30 und einen Filterkopf 20, wie sie in **Fig. 3a und 3b** skizziert sind. Dabei wird das Filtermodul 40 in die Kartusche 30 des Filtergehäuses eingesetzt, wobei ein Ringspalt 13 um das Filtermodul 40 verbleibt. Der obere Abschnitt des Filtergehäuses wird durch den Filterkopf 20 gebildet, der einen Trinkwasserzulaufstutzen 11 aufweist. Filterkopf 20 und Kartusche 30 werden mittels an sich bekannter Verbindungstechnik 50, etwa einem Gewinde, wasserdicht verbunden.

So kann das zu filtrierende Trinkwasser über einen ersten Strömungspfadabschnitt a durch den Trinkwasserzulaufstutzen 11 in den Ringspalt 13 geführt werden. Dort fließt es in axialer Richtung nach unten (Pfeile b), bis es in dem Ringspalt 13 an der äußeren Wandung des Filtermoduls 40 ansteht und dann radial in das Innere des Filtermoduls 40 gemäß den durch das Bezugszeichen c bezeichneten Strömungsabschnitten fließt. Dabei wird das Wasser, das an dem Aktivkohlefuß 43 ansteht, nicht deionisiert, es strömt radial nach innen und gelangt in den Strömungskanal 44. Oberhalb des Aktivkohlefußes 43 durchströmt das Wasser zunächst das lonenaustauschermodul 41 und wird folglich deionisiert, und dann die Aktivkohleschicht des Aktivkohlemoduls 42.

Da die Strömungsgeschwindigkeit durch den Aktivkohleabschnitt höher sein kann, als durch den lonenaustauscherabschnitt, kann zum Erzielen eines vergleichsweise hohen Verschnittwasseranteils ein relativ kleiner Aktivkohlefuß 43 ausreichend sein. Die für einen spezifischen Verschnittwasser notwendige Aufteilung der Oberflächen- und Mengenverhältnisse lässt sich für gegebene Filtermaterialien leicht anhand weniger orientierender Versuche ermitteln.

Das Wasser folgt dem Strömungspfadabschnitt d, bedingt durch den anstehenden Wasserdruck, nach oben und gelangt in einen Filtratablaufstutzen 12, der sich dem Strömungskanal 44 unmittelbar anschließt. Über diesen Filtratablaufstutzen 12 gelangt das Filtrat aus dem Filterkopf 20 nach außen.

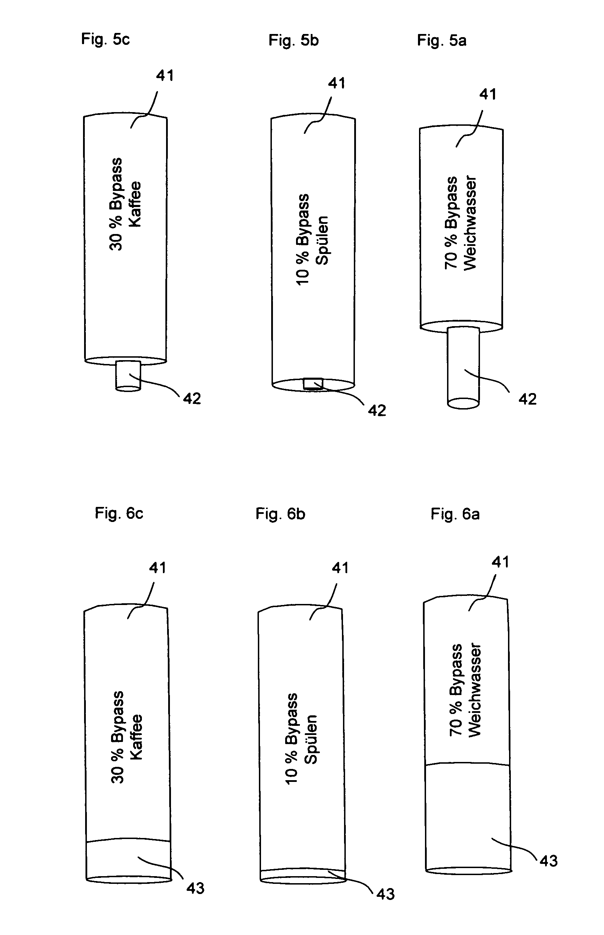

**Fig. 5 und 6** zeigen beispielhaft und lediglich schematisch verschiedene Gestaltungsmöglichkeiten des erfindungsgemäßen Filtermoduls: So kann ein zylindrisches Aktivkohlemodul 42 vollständig von einem lonenaustauschermodul 41 umgeben sein, so dass kein Verschnittwasser resultiert. Ist hingegen ein vergleichsweise kurzes lonenaustauschermodul (**Fig. 5a**) gewählt, so verlassen z.B. etwa 70 % des gefilterten Wassers die Vorrichtung ohne dem lonenaustausch unterzogen worden zu sein. Weitere Anordnungsbeispiele, bei denen jeweils 10 und 30 % Verschnittwasser erzielt werden, sind in **Fig. 5b und 5c** gezeigt.

Ähnlich verhält es sich, wenn ein Aktivkohlemodul mit Fuß 43 gewählt wird, wie in **Fig. 2a** gezeigt: Wird ein relativ großer Aktivkohlefuß gewählt, so gelangen z.B. etwa 70 % des gefilterten Wassers als Verschnittwasser, wie in **Fig. 6a** gezeigt, durch das Filtersystem. Ein entsprechend kleiner Aktivkohlefuß 43 hingegen führt zu einem Anteil von lediglich z.B. 10 % Verschnittwasser, wie es etwa zum Spülen geeignet ist (**Fig. 6b**), wohingegen ein Verschnittanteil von 70 % bei bereits relativ weichem Filtereingangswasser (Trinkwasser) verwendet wird. Ein Verschnittwasser von ca. 30 %, wie es in der Anordnung von **Fig. 6c** erreicht wird, eignet sich sehr häufig für das Herstellen von Kaffee. Es wird ein vergleichsweise kleiner Aktivkohlefuß 43 in das lonenaustauschermodul 41 eingesetzt.

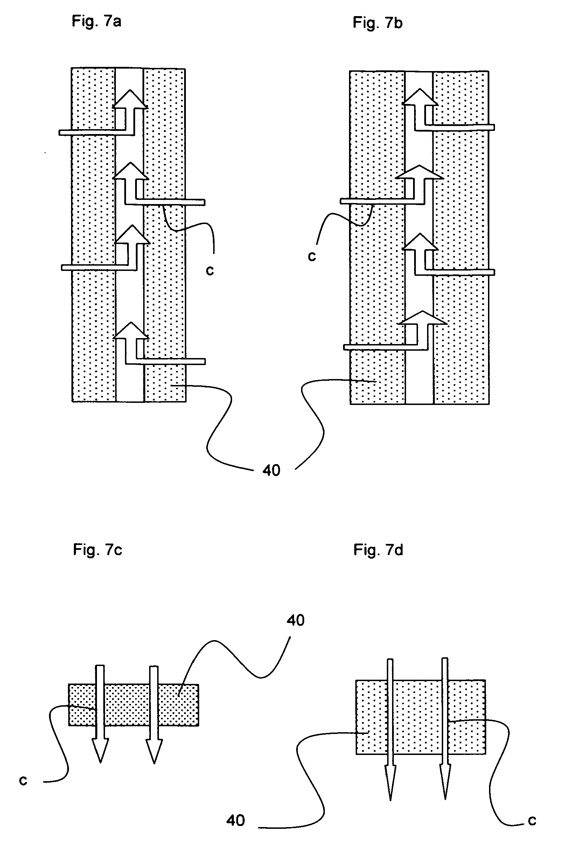

Ein Verschnittwasser kann auch wie in Figur 7a bis 7d veranschaulicht über das Verhältnis von Aktivkohle zu lonenaustauscher und/oder die Dicke des Filtermoduls 40 eingestellt werden.

In Figur 7a ist ein Filtermodul 40 gezeigt, welches als Filtermaterial eine Mischung aus Aktivkohle und lonenaustauscher enthält. Die Mischung kann entweder mittels wasserdurchlässiger Wandungen zu einem formstabilen Filtermaterial geformt werden oder aber durch Sintern der Mischung ein an sich formstabiles Filtermaterial bilden. Das zu filternde Wasser durchströmt das Filtermaterial entlang den durch die Pfeile angedeuteten Pfaden und wird im Strömungsabschnitt c gefiltert. Über die Dicke des Filtermaterials und den Anteil an Aktivkohle wird das Wasser nicht vollständig deionisiert, so dass ein Teil des Wassers trotz Durchströmens des Filtermoduls 40 noch die ursprüngliche lonisierung enthält. In Figur 7b ist ein Filtermodul 40 mit demselben Anteil Aktivkohle gezigt, welches jedoch dicker ist. Dadurch verlängert sich der Strömungspfad c und das Wasser wird stärker deionisiert, also ein kleinerer Verschnittwasseranteil erreicht.

In Figur 7c und 7d ist ein Filtermodul 40 mit einer gesinterten Mishcung aus Aktivkohle und lonenaustauscher als Filtermaterial gezeigt. Dabei ist der Anteil an Aktivkohle im dünneren Filtermodul 40 von Figur 7c höher und im dickeren Filtermodul 40 von Figur 7d geringer. So kann bei beiden über den unterschiedlich langen Strömungspfad c ein gleiches Verschnittwasser erreicht werden. Die Filtermodule 40 von Figur 7c und 7d eignen sich hervorragend zur Anwendung in herkömmlichen, vertikal angeströmten Filtersystemen. Sie werden mit einer von da an wiederverwendbaren entsprechend, angepassten Kartusche an den vorhandenen Filterkopf angebracht.

Da das erfindungsgemäße Filtermodul 40 keine lose Schüttung sondern ein fester Körper ist, wird nach Erreichen der Standzeit lediglich das Filtermodul ausgetauscht, was umweltfreundlich da ressourcenschonend ist. Die druckstabile Kartusche 30 verbleibt im System. Somit kann sie vorteilhaft auch aus einem kostenintensiveren Material gefertigt sein, als die bisher üblichen Kunststoffkartuschen. Die erfindungsgemäße Kartusche 30 kann aus Metall aber natürlich auch aus Kunststoff gefertigt sein.

Gewünschtenfalls kann das erfindungsgemäße Filtermodul 40 natürlich auch mit Einwegkartuschen zum Einsatz kommen, die vorteilhafte Eisntellung des Verschnittwassers wird auch dabei erreicht.

Die vorliegende Erfindung bezieht sich zwar vor allem auf die Filtration von Trinkwasser. Das beschriebene Filtersystem und Filtermodul eignet sich aber natürlich auch für die Filtration anderer Flüssigkeiten, bei denen ähnliche Anforderungen bestehen.

### Bezugszeichenliste

- 10: Filtersystem
- 11: Zulauf
- 12: Filtratablauf
- 13: Raum zwischen Kartusche und Filtermodul
- 20: Filterkopf
- 30: Kartusche
- 40: Filtermodul
- 41: lonenaustauschermodul
- 42: Aktivkohlemodul
- 43: Aktivkohlemodulfuß
- 44: Strömungskanal
- 50: Verbindung

## Patentansprüche

1. Filtersystem (10) mit einem Filtermodul (40), das in einem Filtergehäuse aus einem Filterkopf (20) und einer Kartusche (30) angeordnet ist, **dadurch gekennzeichnet,**
**dass** das Filtermodul (40) ein formstabiles Filtermaterial umfasst, welches unter Freilassung eines Raumes (13) zwischen Kartusche (30) und Filtermodul (40) in der Kartusche (30) angeordnet wird und wobei das Filtermodul (40) einen Strömungskanal (44) aufweist, so dass eine zu filternde Flüssigkeit durch den Raum (13) zwischen der Kartusche (30) und dem Filtermodul (40), durch das Filtermodul und durch den Strömungskanal (44) fließen kann.

2. Filtersystem gemäß Anspruch 1, **dadurch gekennzeichnet, dass** das Filtermodul (40) ein zylindrisches, röhrenförmiges Filtermodul und der Raum ein Ringspalt ist.

3. Filtersystem gemäß Anspruch 1 oder 2, **dadurch gekennzeichnet, dass** das Filtermaterial ein lonenaustauscher, eine Aktivkohle oder eine Kombination der beiden ist, welche zusätzlich ein Vlies, eine Membran oder beides umfassen kann.

4. Filtersystem gemäß mindestens einem der Ansprüche 1 bis 3, **dadurch gekennzeichnet, dass** das Filtermodul (40) ein lonenaustauschermodul (41) aufweist, das ein Aktivkohlemodul (42) zumindest entlang eines Teils seiner Länge umschließt.

5. Filtersystem gemäß Anspruch 4, **dadurch gekennzeichnet, dass** das Aktivkohlemodul (42) einen Aktivkohlefuß (43') aufweist, auf den das lonenaustauschermodul (41) aufgesetzt ist, wobei eine Aussenwandung des lonenaustauschermoduls (41) mit einer Aussenwandung des Aktivkohlefußes (43) bündig abschließt.

6. Filtersystem gemäß mindestens einem der Ansprüche 1 bis 5, **dadurch gekennzeichnet, dass** das formstabile Filtermaterial ein gesintertes lonenaustauschermaterial, eine gesinterte Aktivkohle oder eine Kombination davon ist.

7. Filtersystem gemäß mindestens einem der Ansprüche 1 bis 5, **dadurch gekennzeichnet, dass** das formstabile Filtermaterial von einer formstabilen, flüssigkeitsdurchlässigen Wandung gebildet wird, in welche eine Schüttung von einem oder mehreren Pulver- und/oder Granulatförmigem Filtermaterial eingebracht ist.

8. Filtersystem gemäß Anspruch 6 oder 7, **dadurch gekennzeichnet, dass** die Wandung aus gesinterter Aktivkohle besteht und eine lonenaustauscherschüttung eingebracht ist.

9. Filtersystem gemäß Anspruch 7, **dadurch gekennzeichnet, dass** die Wandung aus einem Gitter, ggfs. mit eingelegtem Vlies und/oder eingelegter Membran, oder aus einem porösen, formstabilen Material besteht und eine Schüttung aus lonenaustauscher oder Aktivkohle oder aus lonenaustauscher und Aktivkohle eingebracht ist.

10. Filtersystem gemäß Anspruch 6, **dadurch gekennzeichnet, dass** das Filtermaterial eine gesinterte, homogene Mischung aus lonenaustauschermaterial und Aktivkohle ist.

11. Verfahren zur Filtration von Flüssigkeiten mit einem Filtersystem umfassend ein Filtermodul (40), welches ein formstabiles Filtermaterial umfasst, das in einem Filtergehäuse aus einem Filterkopf (20) und einer Kartusche (30) angeordnet ist,
**dadurch gekennzeichnet,**
**dass** das Filtermodul (40) einen Strömungskanal (44) aufweist und unter Freilassung eines Raumes (13) zwischen Kartusche (30) und Filtermodul (40) in der Kartusche (30) angeordnet wird, so dass eine zu filternde Flüssigkeit durch den Raum (13) zwischen der Kartusche (30) und dem Filtermodul (40), durch das Filtermodul und durch den Strömungskanal (44) fließen kann.

12. Verfahren gemäß Anspruch 11, **dadurch gekennzeichnet, dass** die zu filternde Flüssigkeit durch einen Zulauf (11) in den Filterkopf (20) fließt, von dort in den Raum (13) zwischen der Kartusche (30) und dem Filtermodul (40), dann radial durch das Filtermaterial in den Strömungskanal (44) und von dort zu einem Filtratablaufstutzen (12) in dem Filterkopf (20) fließt, aus dem die filtrierte Flüssigkeit entnehmbar ist.

13. Verfahren gemäß Anspruch 11, **dadurch gekennzeichnet, dass** die zu filternde Flüssigkeit durch einen Zulauf (11) in den Filterkopf (20) fließt, von dort in den Strömungskanal (44) dann radial durch das Filtermaterial und von dort in den Raum (13) zwischen der Kartusche (30) und dem Filtermodul (40) zu einem Filtratablaufstutzen (12) in dem Filterkopf (20) fließt, aus dem die filtrierte Flüssigkeit entnehmbar ist.

14. Verfahren gemäß mindestens einem der Ansprüche 11 bis 13, **dadurch gekennzeichnet, dass** das Filtermodul (40) ein lonenaustauschermodul (41) aufweist, welches ein Aktivkohlemodul (42) entlang eines Teils seiner Länge umschließt, so dass ein Teil der Flüssigkeit das lonenaustauschermodul (41) und das Aktivkohlemodul (42) durchfließt und ein anderer Teil nur das Aktivkohlemodul (42) durchfließt.

15. Verwendung eines Filtersystems (10) gemäß mindestens einem der Ansprüche 1 bis 10 zur Nachaufbereitung von Trinkwasser in der Gastronomie.

16. Filtermodul (40) für ein Filtersystem gemäß einem der Ansprüche 1 bis 10, **dadurch gekennzeichnet, dass** es ein formstabiles Filtermaterial umfasst, welches ein gesintertes lonenaustauschermaterial, eine gesinterte Aktivkohle oder eine Kombination davon ist.

17. Filtermodul (4) gemäß Anspruch 16, **dadurch gekennzeichnet, dass** es einen zentralen Strömungskanal (44) aufweist.
